# EUROPEAN PATENT APPLICATION

(11) **EP 1 637 983 A2**
(43) Date of publication of application: **22.03.2006**
(21) Application number: 05251266.2
(22) Date of filing: 03.03.2005
(51) Int. Cl.: G06F 3/033

(54) **Electronic apparatus and method of controlling image on screen**

(30) Priority: 21.09.2004 JP 2004273918
(71) Applicant: FUJITSU LIMITED, Kawasaki-shi, Kanagawa 211-8588 (JP)
(72) Inventor: Hamano, Yusuke, c/o Fujitsu Limited, Kawasaki-shi Kanagawa 211-8588 (JP); Nakamura, Toshihisa, c/o Fujitsu Limited, Kawasaki-shi Kanagawa 211-8588 (JP)
(74) Representative: Stebbing, Timothy Charles

(57) **Abstract**

An electronic apparatus (11) includes a switch (22) having contacts (23a-23c) spaced from each other. The contacts are designed to independently establish electric connection. A controller unit (33) is designed to instruct the control of an image on the screen of a display panel (15) in the electronic apparatus when the controller unit sequentially detects the electric connection at at least two of the contacts (23a-23i) in a predetermined time period. A sequential detection of electric connection at the contacts within the predetermined time period is utilized to effect the control of the image on the screen (15) for scrolling or zooming. Conventional contacts can be utilized to establish electric connection. The control of the image can be accomplished with a simple structure, and by a simple operation.

## Description

The present invention relates to an electronic apparatus such as a personal digital assistant (PDA), a cellular phone terminal, and the like. In particular, the invention relates to an electronic apparatus including a display panel having a screen for displaying an image.

A liquid crystal display (LCD) panel is usually incorporated within a cellular phone terminal. The LCD panel is designed to display an image on a screen. Various images may be displayed on the screen of the LCD panel. A scroll keypad may be incorporated in the cellular phone terminal. The user of the cellular phone terminal manipulates the scroll keypad to control scrolling of the images on the screen.

The scroll keypad is separate from a so-called cross keypad in the cellular phone terminal. The scroll keypad is usually made of a disk-shaped or columnar rotary member. However, it can get complicated to realize the scroll keypad in the cellular phone terminal, which is not preferable.

It is accordingly desirable to provide an electronic apparatus having a simplified structure to control an image on a screen of a display panel.

It is further desirable to provide a method of controlling an image on a screen of a display panel as well as program instructions therefor greatly contributing to realization of the electronic apparatus.

According to a first aspect of the present invention, there is provided an electronic apparatus comprising: a display panel having a screen for displaying an image; a switch having contacts spaced from each other, said contacts designed to independently establish electric connection; and a controller unit designed to instruct the control of the image on the screen when the controller unit sequentially detects the electric connection at at least two of the contacts in a predetermined time period.

A sequential detection of electric connection at the contacts within the predetermined time period is utilized to effect the control of the image in the electronic apparatus. Facilitated operations can be achieved to effect the control of the image on the screen. In addition, conventional contacts can be utilized to establish electric connection. The control of the image can be accomplished with a simple structure.

The controller unit may be designed to perform scrolling of the image on the screen when the controller unit sequentially detects the electric connection at at least two of the contacts in a predetermined time period. Preferably, the contacts making the electric connection are arranged in a predetermined direction in the switch. When the controller unit detects a sequential establishment of electric connection at the contacts in the predetermined direction, the controller unit responds by performing a scrolling operation of the image on the screen. Facilitated operations can be accomplished to realize the scroll of the image. Scrolling of the image can thus be achieved with a simple structure.

The controller unit may determine a vector based on the arrangement of the contacts that establish the electric connection. The vector may determine the direction of the scroll. If the contacts are arranged in the lengthwise direction, a vector oriented in the lengthwise direction can be established. Likewise, if the contacts are arranged in the lateral direction, a vector oriented in the lateral direction can be established. An upward, downward, leftward and rightward scroll can thus be accomplished with a simple structure.

The switch may have the contacts arranged in a matrix having three rows and three columns. The user is able to slidingly touch over the switch in a short path so as to close two or more of the contacts sequentially within a short time. The user may use one finger such as a thumb to operate the switch in sequentially establishing the electric connection, for example. A facilitated operation can be accomplished as compared with a conventional electronic apparatus. In addition, contacts mutually arranged in a cross shape can be used as components of a four-way keypad. In this case, the switch is allowed to function not only as a scroll keypad but also as a four-way keypad.

The controller unit may be designed to perform zooming of the image on the screen when the controller unit sequentially detects the electric connection at at least two of the contacts in a predetermined time period. In this case, the contacts of the electric connection are arranged in a predetermined direction in the switch. When the controller unit detects a sequential establishment of electric connection at the contacts in the predetermined direction, the controller unit responds by performing a zoom operation as the control of the image. Facilitated operations can be accomplished to realize the zoom of the image. Zooming of the image can thus be achieved with a simple structure.

The electronic apparatus may be designed to operate based on a battery. A primary cell such as a dry cell or a rechargeable secondary cell may be employed as the battery. The employment of the battery allows portability of the electronic apparatus Moreover, the switch of the electronic apparatus consumes electricpowersolelyatthe electrically-connected contacts. This contributes to a reduced consumption of electric power in the electronic apparatus. The electronic apparatus is thus allowed to operate for longer on battery power when the switch is operated.

According to a second aspect of the present invention, there is provided a method of controlling an image on a screen of a display panel, the method comprising: sequentially detecting electric connection at at least two contacts, selected from a group of contacts spaced from each other in a switch, in a predetermined time period, said group of contacts designed to independently establish electric connection; and effecting control of the image on the screen of the display panel when the electric connection is detected.

A sequential detection of electric connection at the contacts within the predetermined time period is utilized to effect the control of the image in the method. Facilitated operations can be achieved to effect the control of the image on the screen. In addition, a conventional contacts can be utilized to establish electric connection. The control of the image can be accomplished with a simple structure.

The method may further comprise instructing scrolling of the image on the screen when electric connection is sequentially detected at at least two of the contacts, selected from the group of the contacts. In this case, the contacts of the electric connection should be arranged in a predetermined direction in the switch. Facilitated operations can be accomplished to realize the scroll of the image. Scrolling of the image can thus be achieved with a simple structure.

A vector may be determined based on the arrangement of the contacts establishing the electric connection. Such a vector may be related to the direction of the scroll. If the contacts are arranged in the lengthwise direction, a vector oriented in the lengthwise direction can be established. Likewise, if the contacts are arranged in the lateral direction, a vector oriented in the lateral direction can be established. An upward, downward, leftward and rightward scroll can thus be accomplished with a simple structure.

The method may further comprise performing zooming of the image on the screen when electric connection is sequentially detected at at least two of the contacts, selected from the group of the contacts. In this case, the contacts of the electric connection should be arranged in a predetermined direction in the switch. Facilitated operations can be accomplished to realize the zoom of the image. Zooming of the image can thus be achieved with a simple structure.

Program instructions may be provided to accomplish the aforementioned method. In this case, a computer-readable storage medium containing program instructions for controlling an image on a screen of a display panel, may comprise: computer program code causing a processor to sequentially detect electric connection at at least two contacts, selected from a group of contacts spaced from each other in a switch, in a predetermined time period, said group of contacts designed to independently establish electric connection; and computer program code causing a processor to effect control of the image on the screen of the display panel when the electric connection is detected. The program instructions may be installed in a personal digital assistant-(PDA), a cellular phone terminal, and the like.

The above and other features and advantages of the present invention will become apparent from the following description of the preferred embodiment in conjunction with the accompanying drawings, wherein:
Fig. 1 is a front view schematically illustrating a personal digital assistant (PDA) as an electronic apparatus according to an embodiment of the present invention;
Fig. 2 is a plan view schematically illustrating dome switches underneath a switch button;
Fig. 3 is a partial vertical sectional view taken along the line 3-3 in Fig. 1;
Fig. 4 is a partial vertical sectional view taken along the line 4-4 in Fig. 1;
Fig. 5 is a plan view of a printed circuit board for schematically illustrating the arrangement of protrusions on the switch button;
Fig. 6 is a block diagram schematically illustrating the circuitry of the PDA;
Fig. 7 schematically illustrates a display on the screen of a liquid crystal display (LCD) panel according to a specific example;
Fig. 8 is a plan view of the printed circuit board for schematically illustrating a vector of movement according to a specific example;
Fig. 9 is a flowchart illustrating the processings of the implemented software program installed in the PDA according to a specific example;
Fig. 10 schematically illustrates a display after scroll according to a specific example;
Fig. 11 is a plan view of the printed circuit board for schematically illustrating a vector of movement according to a specific example;
Fig. 12 schematically illustrates a display after scroll according to a specific example;
Fig. 13 is a plan view of the printed circuit board for schematically illustrating a vector of movement according to a specific example;
Fig. 14 is a plan view of the printed circuit board for schematically illustrating a vector of movement according to a specific example;
Fig. 15 is a plan view of the printed circuit board for schematically illustrating a vector of movement according to a specific example;
Fig. 16 is a plan view of the printed circuit board for schematically illustrating a vector of movement according to a specific example;
Fig. 17 is a plan view of the printed circuit board for schematically illustrating a vector of movement according to a specific example; and
Fig. 18 is a plan view of the printed circuit board for schematically illustrating a vector of movement according to a specific example.

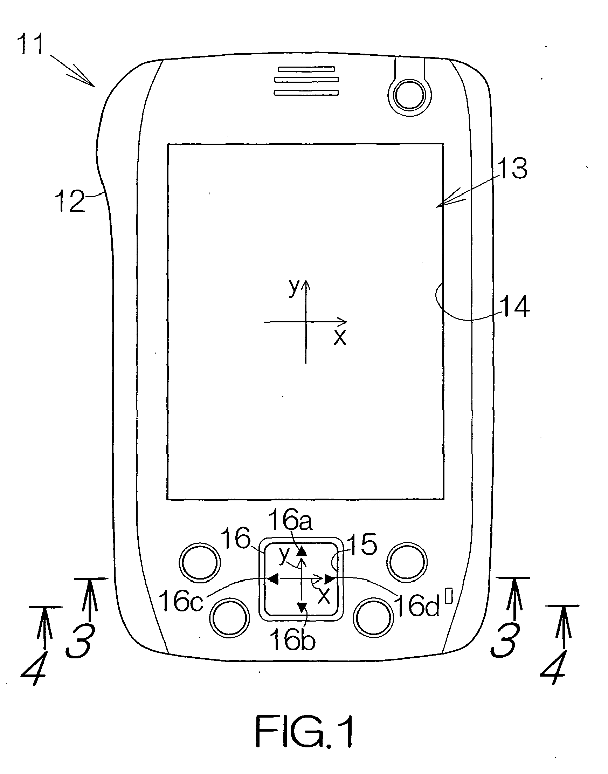

Fig. 1 schematically illustrates a personal digital assistant, PDA, as a specific example of an electronic apparatus according to an embodiment of the present invention. The PDA 11 includes an enclosure for containing a printed circuit board such as a motherboard, for example. Electronic circuit elements such as a central processing unit, CPU, serving as a controller unit, a memory, and the like are mounted on the motherboard. The CPU performs various processings based on software programs and data temporarily stored in the memory, for example.

A flat display panel such as a liquid crystal display (LCD) panel 13 is incorporated within the enclosure 12. The LCD panel 13 defines a screen within a rectangular window opening 14 at the surface of the enclosure 12. A touch screen panel may be superposed on the surface of the LCD panel 13. A stylus may be utilized to input instructions and data to the CPU through the touch screen panel, for example.

A planar x-y coordinate system is assigned to the screen of the LCD panel 13. The y-axis of the x-y coordinate system defines the ordinate of the screen in the lengthwise direction. The x-axis of the x-y coordinate system likewise defines the abscissa of the screen in the lateral direction. When an image includes characters like English words arranged in the lateral direction of the screen, lines of characters extend in parallel with the x-axis. If the image is then scrolled on the screen in the lengthwise direction, the lines of the characters are translated in the direction of the Y-axis . If the image is then scrolled in the lateral direction, the lines of the characters are translated in the direction of the x-axis.

A square opening 15 is defined in the enclosure 12. A square switch button 16 is disposed within the opening 15. Upper and lower delta marks 16a, 16b and left and right delta marks 16c, 16d are carved on the surface of the switch button 16. The upper and lower delta marks 16a, 16b define the y-axis. The left and right delta marks 16c, 16d define the x-axis. A planar x-y coordinate system is thus established on the surface of the switch button 16 based on the upper, lower, left and right delta marks 16a-16d. The x-y coordinate system of the switch button 16 reflects the x-y coordinate of the LCD panel 13. The user of the PDA 11 may utilize the switch button 16 to input various instructions to the CPU.

The PDA 11 is designed to operate based on electric power supplied from a battery, not shown. A closed space may be defined at the back of the enclosure 12, for example, so as to receive the battery. A primary cell such as a dry cell or a rechargeable secondary cell may be employed as the battery. The employment of the battery allows portability of the PDA 11.

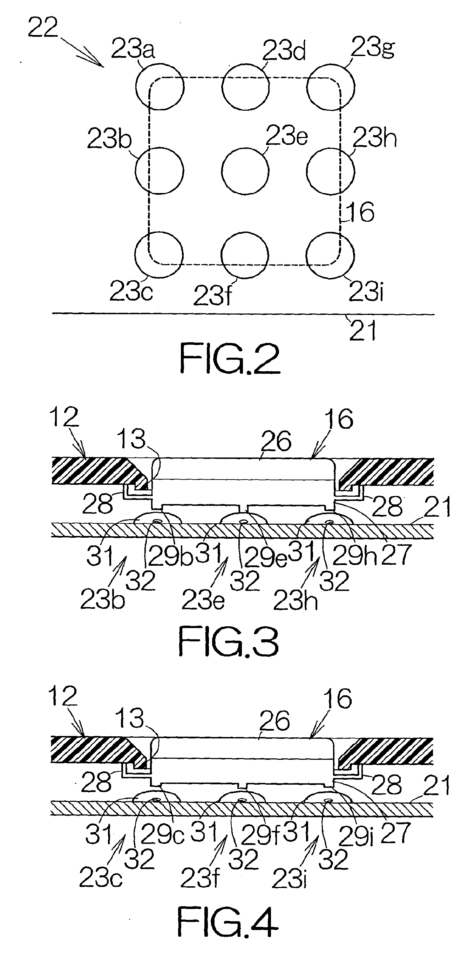

As shown in Fig. 2, a switch set 22 is located on the motherboard 21 within an inner space of the enclosure 12. The aforementioned switch button 16 is received on the switch set 22. In this case, the switch button 16 may take a circular shape as long as the switch button 16 is completely received on the switch set 22. The switch set 22 includes dome switches 23a-23i located in a 3×3 matrix, namely having three rows and three columns. The dome switches 23a-23i may be equally spaced from each other in the row and in the column.

The dome switch 23e serving as a fulcrum is located at the center of the switch button 16, namely at the origin of the x-y coordinate system. The dome switches 23d, 23f, 23b, 23h serving as components of a four-way cross keypad are located at the intermediate positions of the upper, lower, right and left sides of the square switch button 16. The dome switches 23a, 23c, 23g, 23i are located at the corners of the square switch button 16. The dome switches 23a, 23c, 23g, 23i are utilized to perform scroll of an image on the screen of the LCD panel 13 as described later.

As shown in Fig. 3, the switch button 16 includes a button body 26 and an elastic member 27 adhered to the back or lower surface of the button body 26. The button body 26 may be made of a hard plastic material such as polycarbonate, for example. In this case, a molding process may be employed to form the button body 26. The switch button 16 is supported within the opening 15 through elastic supports 28. The elastic member 27 and the elastic supports 28 may be made of an elastic resin material such as rubber, for example.

Protrusions 29a-29i are formed on the elastic member 27 at locations opposite the individual dome switches 23a-23i. The protrusions 29a-29i may be integral to the elastic member 27. The protrusions 29a-29i are arranged in the matrix of 3 by 3, namely having three rows and three columns, in the same manner as the dome switches 23a-23i. The protrusions 29a-29i extend in a direction perpendicular to the surface of the motherboard 21 . The switch button 16 is allowed to move downward toward the inside space of the enclosure 12 in response to an urging force acting on the upper surface of the button body 26.

The protrusion 29e opposite the dome switch 23e stands upright from the elastic member 27 by a first height. The protrusions 29b, 29h opposite the dome switches 23b, 23h stand upright from the elastic member 27 by a second height smaller than the first height. The protrusions 29d, 29f opposite the dome switches 23d, 23f likewise stand upright from the elastic member 27 by the second height.

As shown in Fig. 4, the protrusions 29c, 29i opposite the dome switches 23c, 23i stand upright from the elastic member 27 by a third height smaller than the first and second height. The protrusions 29a, 29g opposite the dome switches 23a, 23g likewise stand upright from the elastic member 27 by the third height.

As shown in Figs. 3 and 4, the individual dome switches 23a-23i include a dome-shaped electrode 31 attached to the surface of the motherboard 21. The electrode 31 includes a dome made of a resin film. The dome forms a space between the surface of the motherboard 21 and itself. An upper electrically conductive film is formed inside the dome. The resin film may be made of resin material such as polyester, polycarbonate, or the like.

A lower electrically conductive film is formed on the surface of the motherboard 21. The lower electrically conductive film is parallel to and spaced apart from the upper electrically conductive film . The upper and lower electrically conductive films are individually connected to electrically conductive patterns spreading over the motherboard 21. When the switch button 16 is pressed down in a direction perpendicular to the surface of the enclosure 12, the protrusion 29a-29i of the switch button 16 drives the top of the dome toward the surface of the motherboard 21 until the upper and lower electrically conductive films contact with each other. Electric connection can in this manner be established in the dome switches 23a-23i. The upper and lower electrically conductive films form contacts of the dome switches 23a-23i.

An air vent 32 is defined in the dome of the electrode 31. The air vent 32 serves to allow the passage of air between the inside space and the outside. When the top of the dome is pressed down, air inside the dome escapes through the air vent 32. This allows deformation of the dome. As described above, deformation of the dome serves to establish electric connection as described above. When the dome is released from a pressing force, air is introduced into the inside space of the dome through the air vent 32. The dome returns to the original shape. The electric connection is disconnected.

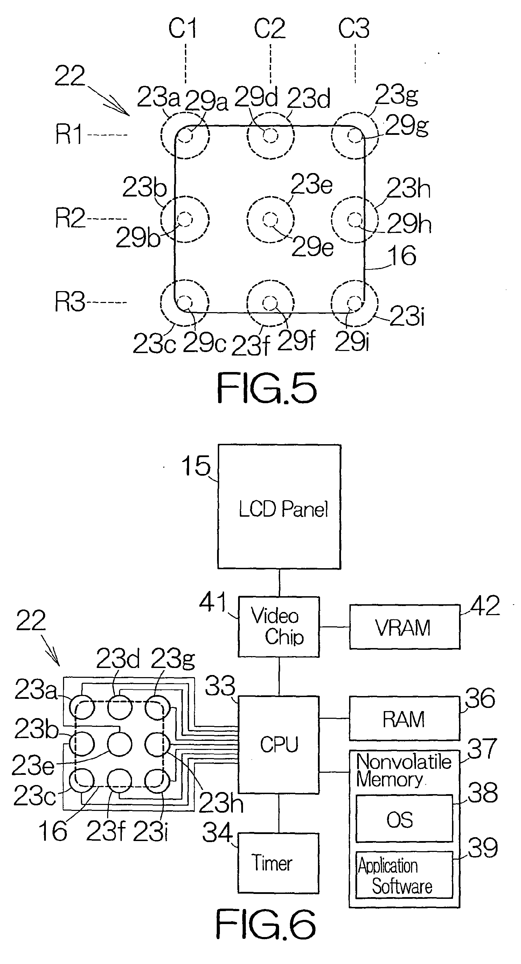

As shown in Fig. 5, when the upper right corner of the switch button 16 near the dome switch 23g is pressed down toward the surface of the motherboard 21, for example, the protrusion 29g swings down around the top of the dome switch 23e toward the surface of the motherboard 21. Electric connection is thus established in the dome switch 23g in response to the swinging movement of the protrusion 29g. Here, the dome switch 23e is designed to bear a larger pressing force as compared with the other dome switches 23a-23d and 23f-23i. The dome switch 23e is thus allowed to serve as a fulcrum. Establishment of electric connection is avoided at the dome switch 23e. Moreover, since the first height of the protrusion 29e is set larger than the second height of the protrusions 29d, 29h, establishment of electric connection is also avoided at the dome switches 23d, 23h. Specifically, no electric connection is established at the dome switches 23a-23f, 23h and 23i located on the rows R2 and R3 and the columns C1 and C2.

When the switch button 16 is pressed down at the delta mark 16d near the dome switch 23h, the protrusion 29h swings down around the top of the dome switch 23e toward the surface of the motherboard 21. Electric connection is thus established in the dome switch 23h in response to the swinging movement of the protrusion 29h. As described above, establishment of electric connection is avoided at the dome switch 23e. Moreover, since the third height of the protrusion 29g, 29i is set smaller than the second height of the protrusions 29h, establishment of electric connection is also avoided at the dome switches 23g, 23i. Specifically, no electric connection is established at the dome switches 23a-23g and 23i located on the rows R1 and R3 and the columns C1 and C2.

Otherwise, when the switch button 16 is pressed down at the origin of the x-y coordinate system on the dome switch 23e, the protrusion 29e is moved down toward the surface of the motherboard 21. Electric connection is established at the dome switch 23e in response to the downward movement of the protrusion 29e. Since, as noted, the first height of the protrusion 29e is set larger than the second and third height of the other protrusions 29a-29d and 29f-29i, no electric connection is established at the dome switches 23a-23d and 23f-23i . The switch set 22 in this manner allows the individual electric connection at the dome switch 23a-23i in response to the downward movement of the switch button 16.

As shown in Fig. 6, a controller unit or CPU 33 is connected to the dome switches 23a-23i. When electric connection is established at the dome switch 23a-23i, the dome switch 23a-23i keeps outputting a signal specifying the connection to the CPU 33. When the electric connection is released, the dome switch 23a-23i stops outputting the signal. The CPU 33 is thus able to detect the electric connection and disconnection of the individual dome switches 23a-23i. The CPU 33 is designed to instruct the control scrolling and zooming of images on the screen of the display as described later in detail.

The CPU 33 identifies a vector of movement based on the arrangement of the dome switches 23a-23i establishing electric connection. The CPU 33 is designed to relate the vector to the direction of the scroll and the types of the zoom. The starting point of the vector is set at the dome switches 23a, 23c, 23g, 23i . The determination of the vector will be described later in detail. The CPU 33 instructs the scroll or zoom of images in response to the downward movement of the switch button 16. Here, the direction of the scroll is set in the lengthwise and lateral direction of the screen on the LCD panel 13. The zoom of images includes zooming in and zooming out.

A timer 34 is connected to the CPU 33. When the CPU 33 detects electric connection at at least one of the dome switches 23a, 23c, 23g, 23i, the CPU 33 instructs the timer 34 to start counting. When a predetermined time period has elapsed at the timer 34, the timer 34 supplies to the CPU 33 a signal specifying the elapse of the predetermined time period. 100ms may be set for the predetermined time period, for example.

A random access memory (RAM) 36 and a nonvolatile memory 37 are connected to the CPU 33. A flash memory may be employed as the nonvolatile memory 37. A basic software program such as an operating system (OS) 38 and the like and an application software program or programs 39 may be stored in the nonvolatile memory 37. The CPU 33 is designed to execute processing in accordance with the OS 38 and the application software program 39 temporarily stored in the RAM 36, for example. The application software program 39 will be described later in detail.

A vide chip 41 is connected to the CPU 33. A video RAM 42 is connected to the video chip 41. The video chip 41 is designed to generate background, text and graphic images based on the instructions from the CPU 33. The generated background, text and graphic images are stored in the video RAM 42. A composite image of the background, text and graphic images are displayed on the screen of the LCD panel 13.

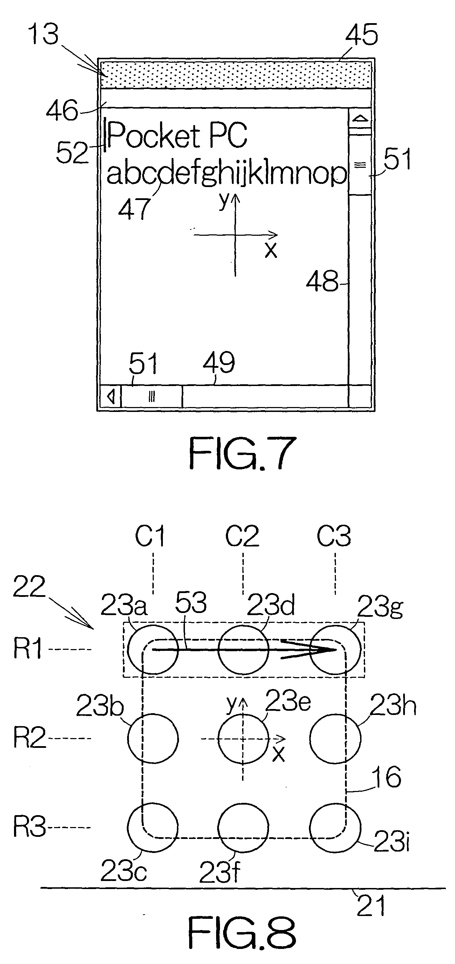

When an application software program 39 such as a word processor is booted up, a window 46 is displayed on the screen 45 of the LCD panel 13, as shown in Fig. 7. The OS 38 serves to generate the image of the window 46, for example. Text 47 arranged in the lateral direction in parallel with the x-axis is displayed in the window 46, for example. A composite image including the window 46 and the text 47 is thus displayed on the screen 45.

A vertical scroll bar 48 is arranged at the right-hand end of the window 46. The vertical scroll bar 48 is utilized to realize scrolling of the text 47 in the lengthwise direction. A horizontal scroll bar 49 is arranged at the lower end of the window 46. The horizontal scroll bar 49 is utilized to realize scrolling of the text 47 in the lateral direction. Scroll boxes 51, 51 are defined in the vertical and horizontal scroll bars 48, 49, respectively. When the scroll box 51 is moved within the vertical scroll bar 48 in the lengthwise direction, the text 47 is scrolled in the lengthwise direction. When the scroll box 51 is moved within the horizontal scroll bar 49 in the lateral direction, the text 47 is scrolled in the lateral direction.

A cursor 52 is displayed within the window 46. The cursor 52 is designed to move in the lengthwise and lateral directions by a height and a width of a character in the text 47. The switch button 16 is utilized to realize the movement of the cursor 52. When electric connection is detected at any of the dome switches 23d, 23f, 23b, 23h in response to the downward movement of the switch button 16, for example, the CPU 33 operates to move the cursor 52 in the lengthwise and lateral directions on the screen 45. In this case, the switch button 16 is utilized as a four-way cross keypad. When the cursor 52 moves downward below the lower end of the screen 45, the text 47 moves upward in the screen 45. When the cursor 52 moves rightward beyond the right-hand end of the screen 45, the text 47 moves leftward in the screen 45.

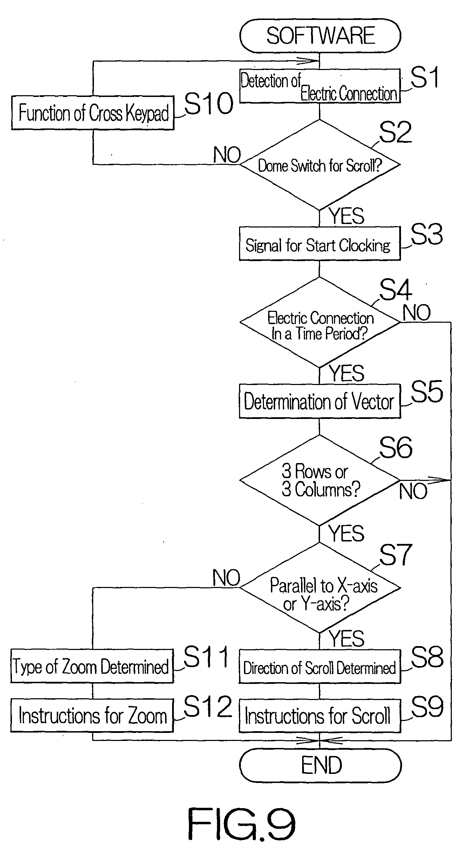

Now, assume that the user of the PDA 11 intends to scroll an image on the screen 45 of the LCD panel 13 in the lateral direction. Here, the composite image including the window 46 and the text 47 is displayed on the screen 45 in the aforementioned manner. The CPU 33 executes the application software program 39 stored in the nonvolatile memory 37. The CPU 33 observes whether or not any electric connection is established at the dome switches 23a-23i. If the user of the PDA 11 presses down the left-hand upper corner of the switch button 16, as shown in Fig. 8, the protrusion 29a is moved downward toward the surface of the motherboard 21. The downward movement of the protrusion 29a serves to establish electric connection at the dome switch 23a.

The CPU 33 receives from the dome switch 23a the signal specifying the electric connection. The CPU 33 thus detects the electric connection at the dome switch 23a at step S1 in Fig. 9. The CPU 33 determines at step S2 whether or not the subject dome switch is any of the dome switches 23a, 23c, 23i, 23g. Here, since the electric connection is established at the dome switch 23a, the processing of the CPU 33 advances to step S3. The CPU 33 supplies the timer 34 with the signal specifying the start of the clock at step S3. The timer 34 receives the signal, so that the timer 34 starts counting.

The CPU 33 then judges whether or not electric connection is established at any of the dome switches 23b-23i at step S4. If the user continuously presses down the intermediate position of the upper side and the right-hand upper corner on the switch button 16, subsequent to the left-hand upper corner, for example, the protrusions 29d, 29g are sequentially moved downward toward the surface of the motherboard 21. The downward movement of the protrusions 29d, 29g induces a sequential establishment of electric connection at the dome switches 23d, 23g. When the CPU 33 receives the signals specifying the electric connection at the dome switches 23d, 23g before it receives from the timer 34 the signal specifying the elapse of the predetermined time period, the processing of the CPU 33 advances to step S5. If the CPU 33 fails to receive the signal specifying the electric connection before it receives the signal specifying the elapse of the predetermined time period, the CPU 33 finishes the operation for the scroll.

As shown in Fig. 8, the CPU 33 identifies at step S5 the vector 53 of movement based on the arrangement of the dome switches 23a, 23d, 23g. Here, the vector 53 is defined to penetrate through the centers of the dome switches 23a, 23d, 23g. The CPU 33 decomposes the vector 53 into the x-component and the y-component. The x= and y-components may be calculated based on the amount of the movement for the position of the electric connection. Here, the position of the electric connection moves on the row R1 from the column C1 to the column C3, so that the amount of movement is determined as three columns.

The CPU 33 then judges at step S6 whether or not the amount of movement is equal to three columns or three rows. Here, since the movement of three columns has been detected, the processing of the CPU 33 advances to step S7. The CPU 33 judges at step S7 whether or not the vector 53 is defined in parallel with the x-axis or Y-axis. Since the vector 53 is defined in parallel with the x-axis in this case, the processing of the CPU 33 advances to step S8. The CPU 33 determines the direction of the scroll based on the direction of the vector 53 at step S8. Here, since the vector 53 is defined in the rightward direction of the screen 45, the CPU 33 relates the vector 53 to the scroll of the image in the rightward direction. The CPU 33 supplies the video chip 41 at step S9 with the signal instructing the scroll of the image. If the amount of the movement fails to reach three rows or three columns, the CPU 33 finishes the operation for the scroll.

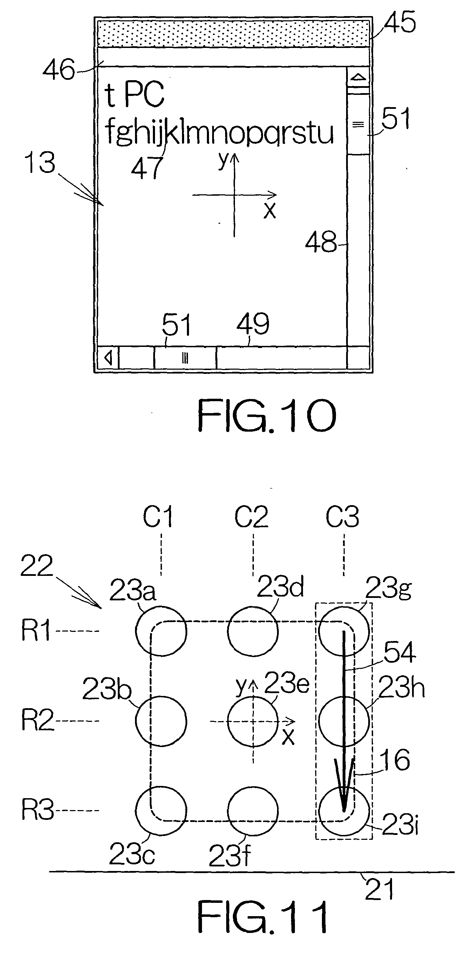

The video chip 41 then moves the image on the screen 45 by a predetermined amount. The amount may previously be set. The image is translated leftward in parallel with the x-axis. As shown in Fig. 10, the text 47 moves leftward in parallel with the x-axis . In this case, the scroll box 51 moves rightward within the horizontal scroll bar 49. The cursor 52 moves leftward along with the text 47. The sequential detection of electric connection at the dome switches 23a, 23d, 23g on the row R1 in this manner enables the scroll of the image in the rightward direction. If the vector 53 is defined in the leftward direction, opposite to the aforementioned rightward direction, the image can be scrolled in the leftward direction on the screen 45.

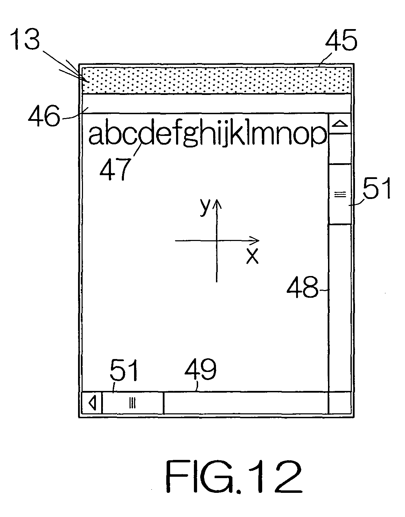

Next, assume the user intends to scroll an image on the screen 45 of the LCD panel 13 in the lengthwise direction. Here, the composite image including the window 46 and the text 47 is displayed on the screen 45 in the aforementioned manner. The CPU 33 observes whether or not any electric connection is established at the dome switches 23a-23i. When the user presses down the right-hand upper corner of the switch button 16, as shown in Fig. 11, the CPU 33 detects electric connection at the dome switch 23g at step S1. Since the electric connection is established at the dome switch 23g, the processing of the CPU 33 advances to step S3 through step S2. The CPU 33 supplies the timer 34 with the signal specifying the start of the clock at step S3.

The CPU 33 then judges whether or not electric connection is established at any of the dome switches 23a-23f and 23h-23i at step S4. If the user continuously presses down the intermediate position of the right-hand side and the right-hand lower corner on the switch button 16, subsequent to the right-hand upper corner, as shown in Fig. 11, for example, electric connection is sequentially established at the dome switches 23h, 23i. If the CPU 33 receives the signals specifying the electric connection at the dome switches 23h, 23i before it receives from the timer 34 the signal specifying the elapse of the predetermined time period, the processing of the CPU 33 advances to step S5.

The CPU 33 identifies at step S5 the vector 54 of movement based on the arrangement of the dome switches 23g, 23h, 23i. Here, the vector 54 is defined to penetrate through the centers of the dome switches 23g, 23h, 23i. Since the position of the electric connection moves on the column C3 from the row R1 to the row R3, the amount of movement is determined as three rows.

The CPU 33 thenjudges at step S6 whether or not the amount of movement is equal to three columns or three rows. Here, since the movement of three rows has been detected, the processing of the CPU 33 advances to step S7 . Since the vector 54 is defined in parallel with the y-axis in this case, the processing of the CPU 33 advances to step S8. The CPU 33 determines the direction of the scroll based on the direction of the vector 54 at step S8. Here, since the vector 54 is defined in the downward direction of the screen 45, the CPU 33 relates the vector 54 to the scroll of the image in the downward direction. The CPU 33 supplies the video chip 41 at step S9 with the signal instructing the scroll of the image.

The video chip 41 then moves the image on the screen 45 by a predetermined amount. The text 47 is thus translated upward on the screen 45 in parallel with the y-axis , as shown in Fig. 12. In this case, the scroll box 51 moves downward within the vertical scroll bar 51. The cursor 52 moves upward along with the text 47. The sequential detection of electric connection at the dome switches 23g, 23h, 23i on the column C3 enables the scroll of the image in the downward direction. If the vector 54 is defined in the upward direction, opposite to the aforementioned downward direction, the image can be scrolled in the upward direction on the screen 45.

Electric connection need not be established in the dome switches 23a-23i in the three rows or three columns in the aforementioned manner so as to realize the scroll of images. For example, electric connection may sequentially be established at least at the dome switches 23a, 23d so as to perform the scroll of an image in the rightward direction. Specifically, electric connection at the dome switch 23g may not be detected at the CPU 33. Otherwise, electric connection may sequentially be established at least at the dome switches 23g, 23h so as to perform the scroll of an image in the downward direction. Specifically, electric connection at the dome switch 23i may not be detected at the CPU 33.

Next, assume that electric connection is established at the dome switch 23d, 23f, 23b, 23h. The composite image including the window 46 and the text 47 is displayed on the screen 45 in the aforementioned manner. When the user of the PDA 11 presses down the switch button 16 at the delta mark 16a, for example, electric connection is established at the dome switch 23d. The CPU 33 detects the electric connection at step S1 in Fig. 9. Since the electric connection is established at the dome switch 23d, the processing of the CPU 33 advances to step S10. The CPU 33 performs the function of a cross keypad. Here, the CPU 33 detects the identification of an upward keypad. The cursor 52 is thus moved upward on the screen 45. When the switch button 16 is kept pressed at the delta mark 16a after the cursor 52 has reached the upper end of the screen 45, the image scrolls upward in response to the upward movement of the cursor 52. The text 47 moves downward on the screen 45.

The aforementioned scroll of the image may involve a simultaneous establishment of electric connection at the dome switches 23d, 23g. In this case, the CPU 33 detects at step S1 the electric connection at the dome switch 23g. If electric connection is thereafter sequentially detected at the dome switches 23h, 23i within the predetermined time period in the same manner as described above, the vector 54 of movement can be established. The CPU 33 then implements the processings of steps S6-S9. Here, electric connection at the dome switch 23d may simply be ignored. The image is scrolled downward on the screen 45. A reliable operation of the button switch 16 can be realized to perform the scroll of images.

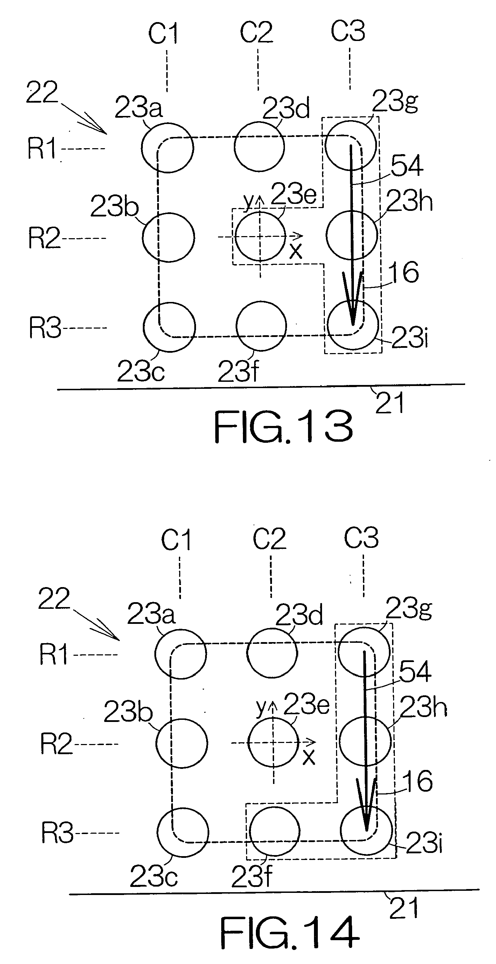

As shown in Fig.13, scrolling can also be performed in response to simultaneous establishment of electric connection at the dome switches 23e, 23h when electric connection is sequentially established at the dome switches 23g, 23h, 23i, for example. In this case, if electric connection is sequentially detected at the dome switches 23g, 23h, 23i within the predetermined time period as described above, the vector 54 of movement can be established. The CPU 33 then implements the processings of steps S6-S9. Here, electric connection at the dome switch 23e may simply be ignored. The image is scrolled downward on the screen 45. A reliable operation of the button switch 16 can be realized to perform the scroll of images.

As shown in Fig. 14, scrolling can also be performed in response to simultaneous establishment of electric connection at the dome switches 23i, 23f when electric connection is sequentially established at the dome switches 23g, 23h, 23i, for example. In this case, if electric connection is sequentially detected at the dome switches 23g, 23h, 23i within the predetermined time period as described above, the vector 54 of movement can be established. The CPU 33 then implements, the processings of steps S6-S9. Here, electric connection at the dome switch 23f may simply be ignored. The image is scrolled downward on the screen 45. A reliable operation of the button switch 16 can be realized to perform the scroll of images.

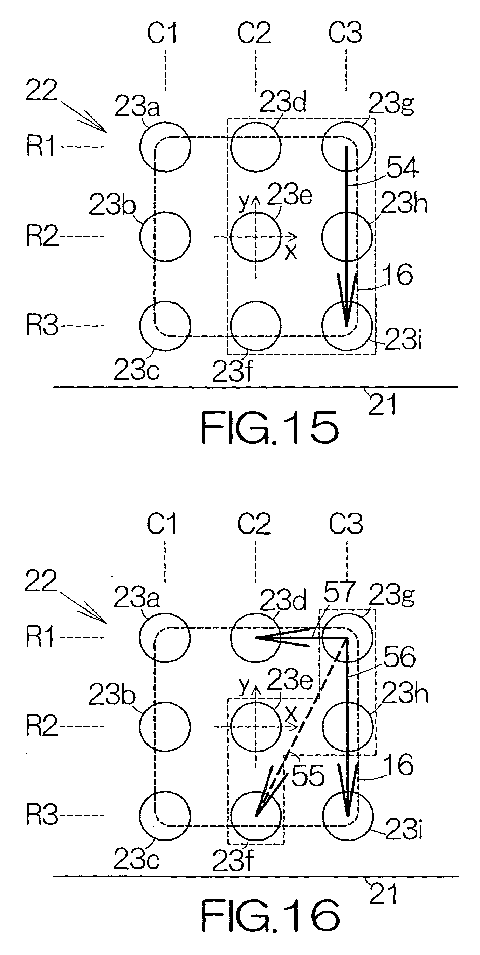

As shown in Fig. 15, scrolling can also be performed based on a simultaneous establishment of electric connection at pairs of the dome switches 23d, 23g, 23e, 23h, 23f, 23i when electric connection is sequentially established at the dome switches 23g, 23h, 23i, for example. In this case, if electric connection is sequentially detected at the dome switches 23g, 23h, 23i within the predetermined time period as described above, the vector 54 of movement can be established. The CPU 33 then implements the processings of steps S6-S9. Here, electric connection at the dome switches 23d, 23e, 23f may simply be ignored. The image is scrolled downward on the screen 45. A reliable operation of the button switch 16 can be realized to perform the scroll of images.

As shown in Fig. 16, scrolling can additionally be based on a sequential establishment of electric connection at the dome switches 23g, 23f via the dome switches 23e, 23h, for example. In this case, the CPU 33 detects at step S5 a vector 55 penetrating through the center of the dome switches 23g, 23f. The CPU 33 calculates the amount of movement for position of the electric connection as described above. Here, the CPU 33 determines three rows for the y-component and two columns for the x-component since the electric connection moves from the column C3 on the row R1 to the column C2 on the rowR3. Specifically, the vector 55 is decomposed into a first vector 56 of three rows in parallel with the y-axis and a second vector 57 of two columns in parallel with the x-axis. The CPU 33 takes the first vector 56 at step S6 since the first vector 56 extends in three rows. The CPU 33 then implements the processings of steps S7-S9 . Here, electric connection at the dome switches 23h, 23e may simply be ignored. The image is scrolled downward on the screen 45. A reliable operation of the button switch 16 can be realized to perform the scroll of images.

Next, assume that no electric connection is established at any dome switches 23b-23i within the predetermined time period after electric connection has been established at the dome switch 23a. When the CPU 33 detects at step S1 electric connection at the dome switch 23a, the processing of the CPU 33 advances to step S3 through step S2. The CPU 33 supplies the timer 34 with the signal specifying the start of the clock at step S3. Here, since electric connection fails to be detected in dome switches 23b-23i except the dome switch 23a, the CPU 33 receives from the timer 34 a signal specifying the elapse of the predetermined time period when the predetermined time period has elapsed. The electric connection at the dome switch 23a may simply be ignored in this case. The CPU 33 finishes the operation of the scroll.

The PDA 11 thus allows simple performance of scroll on the screen based on a sequential establishment of electric connection at contacts within a predetermined time period. The contacts may be the conventional dome switches 23a-23i. The scroll of images can be achieved on the screen of the display 13 with a simple structure.

In addition, the direction of scrolling is related to the vector of movement based on the arrangement of the dome switches 23a-23i establishing electric connection. The vector can be established in the upward, downward, leftward and rightward directions. A simple operation of the switch button 16 enables the upward, downward, leftward and rightward directions with a simple structure.

Moreover, the switch button 16 is also allowed to function as a four-way cross keypad in addition to function of a keypad for scroll. Since the dome switches 23a-23i are arranged in a matrix having three rows and three columns, the user is able to slide a finger over the switch button 16 in a short path so as to establish a sequential establishment of electric connection at the dome switches 23a-23i. The user may use one finger such as a thumb to operate the switch button 16, for example. A facilitated operation can be accomplished as compared with a conventional PDA.

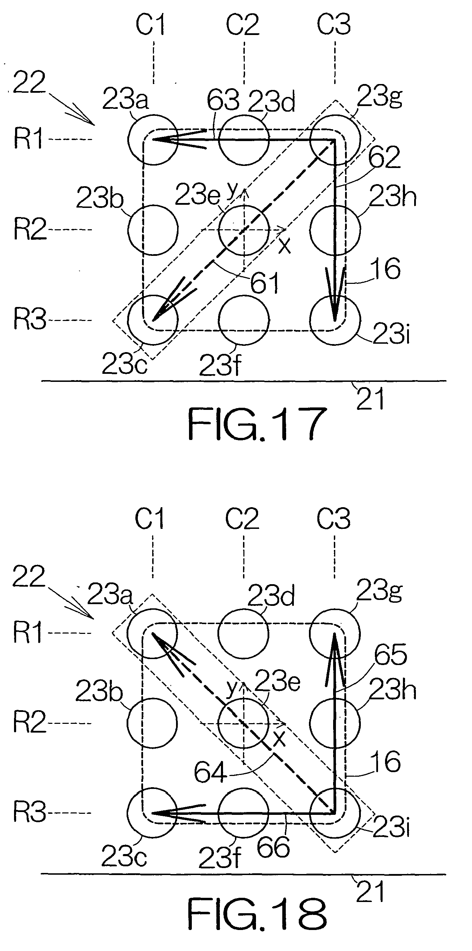

Next, assume that the user of the PDA 11 intends to zoom out or scale down an image on the screen 45 of the LCD panel 13. The composite image including the window 46 and the text 47 is displayed on the screen 45 of the LCD panel 13. The user of the PDA 11 presses down the switch button 16 along the diagonal line as shown in Fig. 17. The CPU 33 detects electric connection at the dome switch 23g, for example, at step S1 in Fig. 9. Here, since the electric connection is established at the dome switch 23g, the processing of the CPU 33 advances to step S3 through step S2. The timer 34 starts operating in response to reception of the signal specifying the start of clocking.

When the user slides a finger from the right-hand upper corner to the left-hand lower corner on the switch button 16, for example, electric connection is sequentially established at the dome switches 23e, 23c in response to the downward movement of the protrusions 29e, 29c. If the CPU 33 sequentially receives from the dome switches 23e, 23c the signals specifying the electric connection before it receives from the timer 34 the signal specifying the elapse of the predetermined time period, the processing of the CPU 33 advances to step S5.

The CPU 33 identifies at step S5 a vector 61 of movement based on the arrangement of the dome switches 23g, 23e, 23c. In this case, the CPU 33 detects the vector 61 pointing through the centers of the dome switches 23g, 23e, 23c. The CPU 33 calculates the amount of movement for the position of the electric connection as described above. Here, the CPU 33 determines three rows for the y-component and three columns for the x-component since the electric connection moves from the column C3 on the row R1 to the column C1 on the row R3. Specifically, the vector 61 is decomposed into a first vector 62 of three rows in parallel with the y-axis and a second vector 63 of three columns in parallel with the x-axis.

The CPU 33 then takes the first and second vectors 62, 63 at step S6. Accordingly, the original vector 61 along the diagonal is identified at the CPU 33. The processing of the CPU 33 then advances to step S7. Since the vector 61 fails to be parallel to any of the x- and y-axes , the processing of the CPU 33 advances to step S11. The CPU 33 determines zooming in or zooming out based on the direction of the vector 61. The direction of the first vector 62 in parallel with the y-axis may be referred to in the CPU 33. Since the first vector 62 is defined in the downward direction on the screen 45, the CPU 33 relates the first vector 62 to the function of zooming out. The CPU 33 supplies at the step S11 the video chip 41 with a signal instructing the zooming out or scaling down of the image. The video chip 41 thus scales down the image on the screen 45 in response to reception of the signal. Detection of a sequential establishment of electric connection at the dome switches 23g, 23e, 23c along the diagonal line enables zooming out of the image.

The zooming out of the image may be accomplished based on a sequential establishment of electric connection at the dome switches 23a, 23e, 23i within the predetermined time period. Alternatively, the zooming out may be accomplished based on a sequential establishment of electric connection at the dome switches 23g, 23c within the predetermined time period. Likewise, the zooming out may be accomplished based on a sequential establishment of electric connection at the dome switches 23a, 23i within the predetermined time period.

Next, assume that the user of the PDA 11 intends to zoom in or scale up an image on the screen 45 of the LCD panel 13. The composite image including the window 46 and the text 47 is displayed on the screen 45 in the aforementioned manner. The user of the PDA 11 presses down the switch button 16 along the diagonal line as shown in Fig. 18. The CPU 33 detects electric connection at the dome switch 23i, for example, at step S1 in Fig. 9. Here, since the electric connection is established at the dome switch 23i, the processing of the CPU 33 advances to step S3 through step S2. The timer 34 starts operating in response to reception of the signal specifying the start of clocking.

When the user slides the finger from the right-hand lower corner to the left-hand upper corner on the switch button 16 , for example, electric connection is sequentially established at the dome switches 23e, 23a in response to the downwardmovement of the protrusions 29e, 29a. If the CPU 33 sequentially receives from the dome switches 23e, 23a the signals specifying the electric connection before it receives from the timer 34 the signal specifying the elapse of the predetermined time period, the processing of the CPU 33 advances to step S5.

The CPU 33 identifies at step S5 a vector 64 of movement based on the arrangement of the dome switches 23i, 23e, 23a. In this case, the CPU 33 detects the vector 61 directed through the centers of the dome switches 23i, 23e, 23a. The CPU 33 calculates the amount of movement for the position of the electric connection as described above. Here, the CPU 33 determines three rows for the y-component and three columns for the x-component since the electric connection moves from the column C3 on the row R3 to the column C1 on the row R1. Specifically, the vector 64 is decomposed into a first vector 65 of three rows in parallel with the y-axis and a second vector 66 of three columns in parallel with the x-axis.

The CPU 33 then takes the first and second vectors 65, 66 at step S6. Accordingly, the original vector 64 along the diagonal is identified at the CPU 33. The processing of the CPU 33 then advances to step S7. Since the vector 64 fails to be parallel to any of the x- and y-axes , the processing of the CPU 33 advances to step S11. The CPU 33 determines zooming in or zooming out based on the direction of the vector 64. Since the first vector 65 is defined in the upward direction on the screen 45, the CPU 33 relates the first vector 65 to the function of zooming in. The CPU 33 supplies at the step S11 the video chip 41 with a signal instructing the zooming in or scaling up of the image. The video chip 41 thus scales up the image on the screen 45 in response to reception of the signal. Detection of a sequential establishment of electric connection at the dome switches 23i, 23e, 23a along the diagonal line enables zooming in of the image.

The zooming in of the image may be accomplished based on a sequential establishment of electric connection at the dome switches 23c, 23e, 23g within the predetermined time period. Alternatively, the zooming out may be accomplished based on a sequential establishment of electric connection at the dome switches 23i, 23a within the predetermined time period. Likewise, the zooming in may be accomplished based on a sequential establishment of electric connection at the dome switches 23c, 23g within the predetermined time period.

Thus, the above PDA allows a sequential detection of electric connection at at least a pair of dome switches arranged in a predetermined direction when zooming is performed on the screen of the display 13. Specifically, electric connection may be detected at the dome switches at the ends of three consecutive dome switches. The contacts maybe the conventional dome switches 23a-23i. The zoom of images can be achieved on the screen of the **display** 13 with a simple structure.

In addition, the switch button 16 is also allowed to function as a four-way cross keypad as well as functioning as a keypad for zoom. Since the dome switches 23a-23i are arranged in the matrix having three rows and three columns, the user is allowed to slide a finger over the switch button 16 in a short path so as to establish a sequential establishment of electric connection at the dome switches 23a-23i. The user may use one finger such as a thumb to operate the switch button 16, for example. A facilitated operation can be accomplished as compared with a conventional PDA.

The aforementioned PDA 11 may allow a continuous scroll or zoom in response to a continuous electric connection at the last dome switch 23a-23i in the sequential establishment of the electric connection. In the casewhere the CPU 33 keeps receiving from the dome switch 23a-23i the signal specifying the electric connection even after the CPU 33 has received from the timer 34 the signal specifying the elapse of the predetermined time period, for example, the CPU 33 outputs a signal specifying the continuation of scroll or zoom. The video chip 41 thus keeps scrolling/zooming the image on the screen 45. When the output of the signal is discontinued from the dome switch 23a-23i, the CPU 33 outputs to the video chip 41 a signal specifying the termination of the scroll or zoom. The scroll or zoom of the image thus stops.

The aforementioned PDA 11 employs the dome switches 23a-23i to realize the scroll or zoom of the image on the screen of the LCD panel 13 as described above. Electric connection at the dome switches 23a-23i induces consumption of electric power. Disconnection of the contacts leads to no consumption of electric power at the dome switches 23a-23i . This contributes to a reduced consumption of electric power in the PDA 11. The PDA 11 is thus allowed to operate for longer based on electric supply from the battery.

## Claims

1. An electronic apparatus comprising:
a display panel having a screen for displaying an image;
a switch having contacts spaced from each other, said contacts designed to independently establish electric connection; and
a controller unit designed to instruct control of the image on the screen when the controller unit sequentially detects the electric connection at at least two of the contacts in a predetermined time period.

2. The electronic apparatus according to claim 1, wherein said controller unit is designed to instruct scroll of the image on the screen when the controller unit sequentially detects the electric connection at at least two of the contacts in a predetermined time period, said two being arranged in a predetermined direction in the switch.

3. The electronic apparatus according to claim 2, wherein said controller unit is designed to relate a vector to a direction of the scroll, said vector being determined based on the mutual arrangement of said at least two contacts.

4. The electronic apparatus according to claim 1, 2, or 3, wherein said switch has the contacts arranged in a matrix having three rows and three columns.

5. The electronic apparatus according to claim 1, 2, 3, or 4, wherein said controller unit is designed to instruct zoom of the image on the screen when the controller unit sequentially detects the electric connection at at least two of the contacts in a predetermined time period, said two being arranged in a predetermined direction in the switch.

6. A method of controlling an image on a screen of a display panel, said method comprising:
sequentially detecting electric connection at at least two contacts, selected from a group of contacts spaced from each other in a switch, in a predetermined time period, said group of contacts designed to independently establish electric connection; and
effecting control of the image on the screen of the display panel when the electric connection is detected.

7. The method according to claim 6, further comprising instructing scroll of the image on the screen when electric connection is sequentially detected at at least two of the contacts, selected from the group of the contacts, said two being arranged in a predetermined direction in the switch.

8. The method according to claim 7, wherein a vector is related to a direction of the scroll, said vector being determined based on the mutual arrangement of said at least two of the contacts.

9. The method according to claim 6, 7, or 8, further comprising instructing zoom of the image on the screen when electric connection is sequentially detected at at least two of the contacts, selected from the group of the contacts, said two being arranged in a predetermined direction in the switch.

10. A computer-readable storage medium containing program instructions for causing a processor to carry out the method of any of claims 6 to 9.
